# DEMANDE DE BREVET EUROPEEN

(11) **EP 1 367 515 A1**
(43) Date de publication de la demande: **03.12.2003**
(21) Numéro de dépôt: 02291303.2
(22) Date de dépôt: 29.05.2002
(51) Int. Cl.: G06F 17/60

(54) **Système d'information pour la gestion dynamique de produits en vrac**

(71) Demandeur: L'AIR LIQUIDE, Société Anonyme à Directoire et Conseil de Surveillance pour l'Etude et l'Exploitation des, 75321 Paris Cédex 07 (FR)
(72) Inventeur: Dick, Marie-Caroline, 92340 Bourg La Reine (FR); Rotman, Frédéric, 75017 Paris (FR); Muratet, Christian, 75012 Paris (FR)
(74) Mandataire: Vesin, Jacques

(57) **Abrégé**

L'invention concerne un système de contrôle d'au moins une unité de production (3) d'au moins un produit, en fonction de données de consommation dudit produit par au moins une unité consommatrice de ce produit, comportant:
- des moyens de mémorisation (4), pour mémoriser des données relatives à au moins l'état de stocks dudit produit contenus dans des moyens de stockage (7) dudit consommateur et aux besoins en produit de ce consommateur,
- des moyens (16) de calcul de données de prévisions de consommation, en fonction des données mémorisées précédentes,
- des moyens pour transmettre ces données à ladite unité de production (3).

## Description

### Domaine technique et art antérieur.

L'invention concerne le domaine de la gestion de produits en vrac, et notamment de produits tel que des gaz, par exemple des produits cryogéniques sous forme liquide.

La production de gaz par un fabriquant de gaz est en général un processus continu.

De même, les procédés de production industrielle des utilisateurs de tels gaz sont également souvent continus. Ceci signifie que la matière première est un élément critique dans la chaîne de production, et ne doit donc pas bloquer celle-ci.

Par ailleurs, dans certains cas, un produit tel qu'un gaz est un élément critique pour la sécurité d'un processus de production. C'est le cas pour des gaz, tel que par exemple l'azote, qui doivent avoir un débit minimal continu pour éviter des explosions.

Les sites de production ou de stockage de tels produits en vrac, et les sites d'utilisation de ces produits, sont en général distincts et ne sont pas reliés par un réseau. Ce schéma s'oppose aux schémas de distribution de fluides tel que l'eau ou le gaz naturel, ou encore de l'électricité, pour lesquels les sites de production et de consommation sont unis par un réseau.

Dans le cas de produits en vrac, et notamment de gaz industriels, la gestion de la continuité, à la fois de la production et de la consommation, est donc un problème techniquement très complexe.

En outre, la réglementation sur les matières dangereuses implique en général une limitation, à la fois en quantité et dans le temps, du volume de stockage, ainsi que des restrictions concernant la circulation de ces matières dans l'espace et dans le temps.

Autre contrainte, de tels produits sont souvent périssables. C'est le cas, par exemple, de formulations chimiques, ou de résines. Des temps de transport ou de stockage trop longs peuvent donc entraîner la perte du produit. Par exemple, dans le cas de gaz, il peut y avoir réchauffement, ou vaporisation et mise à l'air par des soupapes.

Des mesures de sécurité sont imposées pour la manipulation et l'utilisation de certains produits. Dans le cas de gaz, il faudra respecter, par exemple, une vitesse de remplissage adaptée, une pression minimale et/ou maximale, etc. Un personnel formé et qualifié est donc nécessaire pour une bonne prévention des risques.

Toutes ces questions techniques ont des répercutions en ce qui concerne les coûts. Le coût du transport est un élément important dans le coût du produit fourni à l'utilisateur. Les coûts de gestion et de surveillance du stockage ne sont, non plus, pas négligeables.

Il se pose donc le problème de trouver des outils ou des moyens permettant une gestion la plus adaptée possible aux contraintes de production et d'utilisation de produits en vrac, notamment dans le cas de gaz industriels.

Un autre problème est celui de la gestion centralisée de l'alimentation en produit(s) d'un site industriel, utilisant ce(s) produit(s) comme matière première. En effet, les sites industriels actuels sont de plus en plus complexes, étendus, et nécessitent un approvisionnement en matière première sur différents sites de stockages ou sur différents sites de production. On ne dispose pas, à l'heure actuelle, d'outils permettant de réaliser un contrôle centralisé de l'alimentation en matière première de ces différents sites. Or, une telle centralisation est indispensable à un contrôle rationnel de ces sites.

On ne dispose pas, non plus, de processus ni d'outils permettant de faire communiquer les différents acteurs du processus de production-livraison-utilisation de ces matières premières.

Selon un autre aspect, pour des produits en vrac, le consommateur a parfois un manque de maîtrise de sa consommation, et il ne peut souvent pas avoir d'information sur la relation entre sa production et sa consommation desdits produits en vrac.

C'est, notamment, le cas lorsque la consommation se fait en plusieurs points (ce qui a déjà été évoqué ci-dessus) et/ou est liée à des modes de consommation différents. Anticiper sur les besoins futurs est donc difficile pour le consommateur, et encore plus difficile pour le fournisseur qui est amené à fournir dans le cadre d'un objectif de non rupture de l'approvisionnement.

Jusqu'à présent, la solution de la fourniture de produit en vrac dans cet environnement complexe se réalisait:
- en reproduisant des schémas historiques simples de livraison, par exemple en reproduisant la base des dernières livraisons (délai, quantité);
- ou par échange à distance, par exemple par relation téléphonique entre le client et le fournisseur.

### Exposé de l'invention

L'invention concerne d'abord un procédé pour adapter une production, par une unité de production d'au moins un produit à une consommation dudit produit par au moins un consommateur de ce produit, comportant:
- la mémorisation, dans des moyens de mémorisation, de données relatives à au moins l'état de stocks dudit produit contenus dans des moyens de stockage dudit consommateur et aux besoins en produit de ce consommateur,
- le calcul de données de prévisions de consommation, en fonction des données mémorisées précédentes.

Ces données peuvent ensuite être transmises à ladite unité de production, ou bien peuvent être consultées à distance.

La production de l'unité de production peut ensuite être modifiée en fonction des données de prévision de consommation précédentes.

Les données relatives aux besoins peuvent être exprimées en quantité ou en masse ou en volume de produit par unité de temps, par exemple par jour ou par semaine ou par mois, éventuellement pendant une certaine durée (par exemple : 2 tonnes par jour pendant 2 mois).

Il en va de même pour les données de prévision de consommation, qui peuvent en outre concerner une période de temps telle que une ou plusieurs journée(s) ou semaine(s) ou mois (par exemple : 3 tonnes par semaine pendant deux mois).

Ce procédé permet en outre de tenir compte au mieux des caractéristiques techniques du produit, en particulier dans le cas d'une matière dangereuse ou périssable.

L'invention concerne également un procédé d'approvisionnement d'un consommateur, ou d'un site consommateur, ou d'un site industriel consommateur, en au moins un produit consommé par ledit consommateur ou ledit site, comportant:
- la mémorisation, dans des moyens de mémorisation, de données relatives à au moins l'état de stocks dudit produit contenus dans des moyens de stockage dudit consommateur ou dudit site, et aux besoins en produit de ce consommateur ou de ce site,
- le calcul de données de prévisions de consommation, en fonction des données mémorisées précédentes,
- la génération, de préférence automatique, de données de livraison dudit produit en fonction des données de prévisions de consommation calculées.

La livraison ou l'alimentation en produit peut donc être adaptée aux besoins du consommateur.

L'invention concerne également un procédé pour adapter une utilisation, par une unité de consommation d'au moins un produit, comportant:
- la mémorisation, dans des moyens de mémorisation, de données relatives à au moins l'état de stocks dudit produit contenus dans des moyens de stockage dudit consommateur et aux besoins en produit de ce consommateur,
- la variation de consommation, par l'unité de consommation, en fonction des données précédentes.

Les données contenues dans les moyens de mémorisation peuvent être transmises à ladite unité de consommation, ou bien peuvent être consultées à distance.

Les données relatives aux besoins et les données de prévision de consommation peuvent être indiquées comme décrit ci-dessus, en qunatité ou masse ou volume par unité de temps, éventuellement sur une certaine durée.

Une étape de conditionnement et de transport peut ensuite avoir lieu.

Par ailleurs, il est en outre possible de mémoriser des données de quantité ou de volume ou de masse de produits effectivement livrés.

Selon l'invention, on obtient une production ou une fourniture adaptée aux besoins du site industriel consommateur. Ceci est d'autant plus avantageux lors d'une production et/ou d'une consommation continue de produits, notamment de produits en vrac, distribués sans infrastructure fixe de distribution comme il en existe dans le cas de l'eau ou de l'électricité ou du gaz naturel.

Les quantités effectivement disponibles dans les moyens de stockage peuvent également être mesurées puis introduites dans les moyens de mémorisation, à la suite de quoi les données relatives à l'état des stocks et/ou les données de prévision peuvent aussi être modifiées.

L'utilisateur, c'est-à-dire le consommateur ou le site consommateur, peut aussi modifier les données de consommation ou de besoin mémorisées, par exemple suite à une modification de ses plans ou prévisions de travail. Là encore, les données de prévision peuvent alors être recalculées en fonction des données modifiées.

Les moyens de mémorisation peuvent en outre contenir des données de caractéristiques techniques de moyens de production dudit consommateur utilisant ledit produit ou relatives à des unités de fabrication dudit produit.

Ils peuvent en outre comporter ou mémoriser des données relatives à des livraisons dudit produit, livraisons passées et/ou en cours et/ou futures.

L'utilisateur dispose ainsi d'une information technique globale, y compris sur ses propres installations. Le producteur et/ou le fournisseur peuvent aussi disposer de cette information technique globale.

L'invention concerne en outre un système de contrôle d'au moins une unité de production d'au moins un produit, en fonction de données de consommation dudit produit par au moins une unité consommatrice de ce produit, comportant:
- des moyens de mémorisation, pour mémoriser des données relatives à au moins l'état de stocks dudit produit contenus dans des moyens de stockage dudit consommateur et aux besoins en produit de ce consommateur,
- des moyens de calcul de données de prévisions de consommation, ou spécialement programmés pour calculer de telles données, en fonction des données mémorisées précédentes,
- des moyens pour transmettre ces données à ladite unité de production.

Par ailleurs, une unité de production de produits industriels selon l'invention peut comporter:
- des moyens de production desdits produits,
- des moyens de communication pour établir une communication avec un système tel que décrit ci-dessus.

L'invention concerne en outre un système de contrôle de l'approvisionnement d'une unité consommatrice d'un produit, comportant:
- des moyens de mémorisation, pour mémoriser des données relatives à au moins l'état de stocks dudit produit contenus dans des moyens de stockage de ladite unité consommatrice et aux besoins en produit de cette unité,
- des moyens de calcul de données de prévisions de consommation, ou spécialement programmés pour calculer de telles données, en fonction des données mémorisées précédentes,
- des moyens de génération automatique de données de livraison dudit produit en fonction des données de prévisions de consommation calculées.

Par ailleurs, une unité de production industrielle selon l'invention peut comporter:
- des moyens de stockage de produits, dits produits premiers,
- des moyens de production de produits seconds, obtenus à partir des produits premiers,
- des moyens de communication pour établir une liaison informatique avec un système tel que décrit ci-dessus.

Un système ou une unité tel que ci-dessus peut en outre comporter des moyens de communication entre lesdits moyens de mesure et lesdits moyens de mémorisation ou entre lesdits moyens de mesure et des moyens informatiques contenant ces moyens de mémorisation et/ou des moyens pour établir une liaison sécurisée avec des moyens de communication d'une unité consommatrice et/ou des moyens pour établir une liaison sécurisée avec des moyens de communication d'une unité de production des produits et/ou des moyens pour établir une liaison sécurisée avec des moyens de communication d'une unité de gestion de moyens de transport.

L'invention concerne également un dispositif informatique, ou dispositif d'aide à la gestion des stocks d'au moins un produit, en fonction d'une consommation dudit produit par un utilisateur, comportant:
- des moyens de mémorisation mémorisant des données sur les stocks et la consommation de, ou les besoins en, produits industriels par au moins un site industriel consommateur de ces produits,
- des moyens de connexion pour établir une liaison ou une connexion avec des moyens de communication d'au moins un site d'utilisation des produits, ou un site de production utilisant ces produits, et des moyens de communication d'au moins un site de production ou de stockage de ces produits.

La liaison ou la connexion est de préférence sécurisée.

Un tel dispositif peut en outre comporter des moyens de calcul de données de prévisions de consommation, en fonction des données mémorisées précédentes.

Selon un mode de réalisation, ce dispositif peut en outre comporter des moyens de connexion d'au moins une partie des données à des moyens de communication d'un transporteur desdits produits.

Un réseau de production industriel peut comporter une ou plusieurs unité(s) de production, par exemple une ou plusieurs usines, reliées, par des moyens de communication, à un dispositif informatique tel que décrit ci-dessus.

Un ensemble industriel selon l'invention peut comporter au moins un site d'utilisation des produits, ou un site de production utiisant ces produits, au moins un site de production de ces produits ou un site de stockage d'un fournisseur de ces produits, et un dispositif informatique tel que décrit ci-dessus.

Ainsi deux, trois ou plus de trois sites d'utilisation ou de production peuvent être alimentés de manière rationnelle en produits ou matière première provenant d'un producteur ou d'un distributeur.

### Brève description des figures

- la figure 1 représente un mode de réalisation de l'invention,
- la figure 2 représente de manière schématique des moyens informatiques d'un mode de réalisation de l'invention,
- la figure 3 représente de manière schématique un serveur, un réseau et des moyens informatiques d'accès au réseau,
- les figures 4 A à 4 E représentent des pages écran pouvant apparaître lors de la mise en oeuvre d'un procédé selon l'invention.

### Description détaillée de modes de réalisation de l'invention

Dans toute la description qui suit on désignera par l'expression « produit » une matière destinée à être utilisée par la suite dans un processus de fabrication, dans une usine ou dans un service. Un tel produit peut être par exemple un gaz, notamment du type livré et stocké sous forme liquide. Un exemple d'usine est celui d'une aciérie, qui utilise des gaz pour certaines étapes de fabrication de l'acier.

Un exemple de service est un service médical qui utilise aussi certains gaz.

Le gaz peut être pris comme exemple de produit, mais d'autres produits peuvent être concernés par la présente invention. Selon un autre exemple l'acier produit par une aciérie peut faire lui-même, après fabrication, office de matière première et être utilisé dans tout type d'industrie lourde.

D'une manière générale, l'invention trouve application dans tout type d'industrie où des produits sont utilisés comme matière première en vue de la fabrication d'autres produits, dits produits seconds ou transformés.

Elle trouve également application dans tous les services, où certains produits sont consommés en vue de la réalisation d'une certaine prestation. L'exemple a été donné ci-dessus de services médicaux.

On désigne par "client" ou "utilisateur" ou consommateur la personne qui gère ou qui est responsable du laboratoire ou de l'usine où sont utilisés ces produits industriels, ou bien où sont localisés les services alimentés en produits.

On désignera par ailleurs par fabricant la personne qui fabrique les produits utilisés par le client. L'invention s'applique également au cas d'un distributeur ou d'un fournisseur non fabricant.

En général, le produit ou la matière première en question est fabriqué ou obtenu ou d'abord stocké sur un site de production ou de stockage distinct de son lieu d'utilisation.

Une étape intermédiaire de transport est donc alors réalisée.

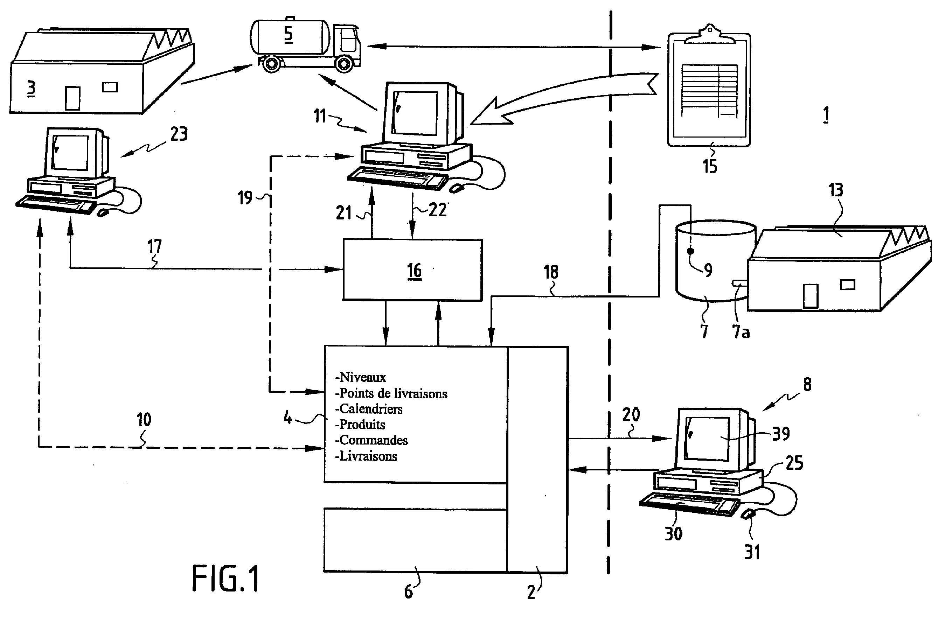

Un exemple de réalisation d'un système permettant la mise en oeuvre de l'invention va être décrit en liaison avec la figure 1, sur laquelle la référence 1 désigne le client, ou un ensemble de moyens dont il dispose (à droite de la ligne verticale en traits interrompus), en particulier des moyens de stockage 7, des moyens 13 de production de produits seconds, et des moyens informatiques 8.

Sur la figure 1, une seule unité de stockage 7 est représentée, mais l'installation peut aussi comporter plusieurs unités de stockage. Des moyens 7a d'alimentation en produits contenus dans l'unité de stockage 7 relient cette dernière et les moyens de production 13.

La référence 3 désigne une usine ou, plus généralement, des moyens de fabrication des produits ou de la matière première, par exemple un gaz. Ce peut être aussi une unité de stockage d'un fournisseur ou d'un distributeur. Elle est équipée de moyens informatiques 23.

L'utilisateur et le producteur ou le fournisseur ne sont pas reliés par une infrastructure fixe de distribution des produits, comme dans le cas de l'électricité ou de la distribution de l'eau.

Un autre intervenant est donc le transporteur, muni de moyens 5 de transport ou de livraison 5 tels que par exemple des camions (ou tout uatre véhicule adapté au trasport des produits en question) qui va être chargé de livrer au client 1 des produits en provenance de l'usine 3. Il peut lui aussi être équipé de moyens informatiques 11.

Sur la figure 1, la référence 2 désigne un site ou une application web, en communication ou en réseau (par exemple un réseau privé) avec les moyens informatiques des différents intervenants (client, fabricant ou fournisseur, transporteur). Les références 10, 17, 19, 20, 21 et 22 désignent les liaisons correspondantes. En fait, certaines de ces connexions sont établies avec une application 16, dont il sera question plus loin.

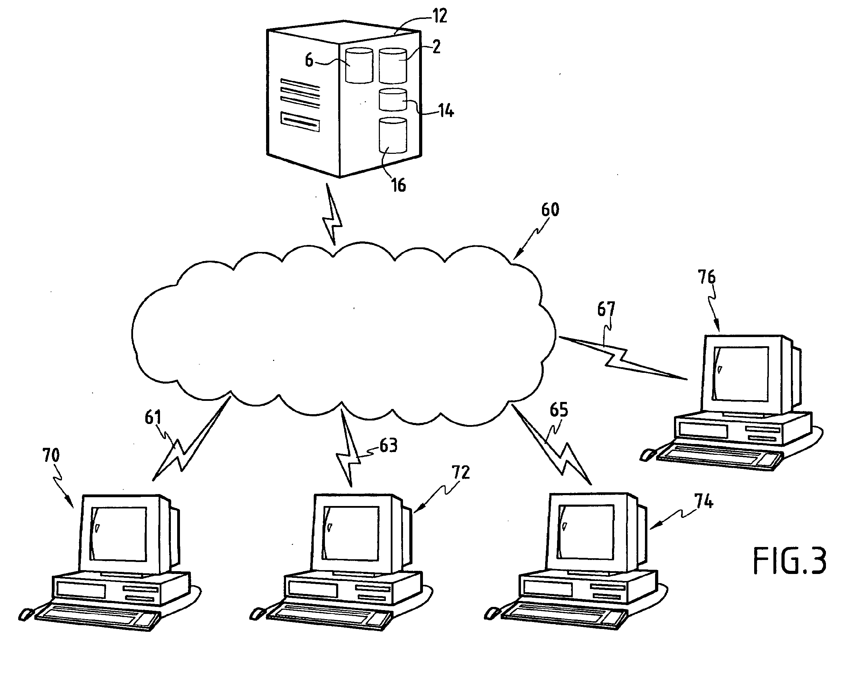

Comme illustré sur la figure 3, ce site 2 est hébergé sur un ordinateur central ou un serveur 12, et contient notamment une base de données 4.

Une telle base de données peut être mise à jour et comporte par exemple les informations suivantes:
- les différents points de livraison, avec les capacités de stockage aux points de livraison, la nature du produit stocké en ces points, les heures de livraison,
- divers calendriers, tels que, par exemple, un calendrier correspondant à un client (ses contraintes (horaires d'ouverture, accessibilité), et/ou les périodes connues d'utilisation plus ou moins intenses par celui-ci, et/ou un calendrier relatif à la circulation des véhicules de livraison, et/ou un calendrier contenant des indications relatives aux jours fériés,...etc.).
- les différents produits pouvant être offerts par le fabricant ou le distributeur ou le fournisseur, identifiés par exemple par un ou des codes, et éventuellement les sites de production ou de stockage correspondants,
- un historique des commandes des clients (dates, quantités...)
- les niveaux de stockage des produits chez les utilisateurs,
- les livraisons de produits, passées, en cours et prévues,
- le plan de tournée pour les prochaines livraisons prévues,
- des prévisions de consommation,
- des données contractuelles.

D'autres informations telles que des informations réglementaires relatives à tel ou tel type de produit, peuvent également être utilisées et présentes sur le site 2, par exemple dans une base juridique ou réglementaire 14 (figure 3). Certains produits ne peuvent par exemple être livrés certains jours, par exemple le week-end, du fait d'interdictions administratives, ou ne peuvent être livrés que dans certaines conditions de sécurité bien particulières, qui peuvent être imposées par la nature même du produit ou qui peuvent aussi être imposées par l'administration elle-même.

En complément, des formulaires de demande de dérogation à certaines de ces contraintes administratives peuvent aussi être disponibles sur le site. Dans ce cas, le client ou l'utilisateur, qui a accès à ces informations, peut télécharger depuis la base 14 un formulaire type, qu'il peut ensuite remplir et présenter directement aux services administratifs susceptibles d'accorder la dérogation requise.

Cette base de données est alimentée par les différents intervenants dans le système ou la chaîne menant de la fabrication à la livraison des gaz à l'utilisateur ou à l'utilisation du gaz par ce dernier : le fabricant ou le fournisseur de gaz, les techniciens ou équipes chargées de la distribution et de la prise de commande, le personnel effectuant les livraisons et qui fournissent des informations en retour de ces tournées, ou bien encore le client lui-même qui donne des informations, par exemple sur des rythmes de production qui vont varier.

Elle est également alimentée par les résultats de calculs de consommation et/ou de prévision, effectués par une application 16 elle aussi hébergée sur le serveur 12.

Cette application permet de calculer, à partir des données contenues dans la base 4, les consommations ou des données relatives à des consommations prévues pour le futur dans les différents sites de production tels que le site 13. Les données de consommation résultantes seront par exemple xa tonnes d'acier par jour (par exemple pendant une durée de xm mois), ou bien encore xl litres d'azote liquide par jour pendant xs semaines. Les données de livraison correpondantes (quantité à livrer, date et heure de livraison, client à livrer) peuvent aussi être générées à partir des données de la base 4.

Cette application 16 peut aussi éventuellement calculer des données d'autonomie de fonctionnement avec le produit restant dans les moyens de stockage 7.

L'ensemble des données de consommation relatives à plusieurs sites d'un même utilisateur peuvent donc être rassemblées dans des moyens de mémorisation d'un même système informatique.

Une autre source d'information est constituée par les mesures de contenu ou de niveau effectuées sur les moyens de stockage 7. Ces mesures peuvent être effectuées de manière manuelle, puis elles sont transmises au serveur et à la base de données à l'aide des moyens 8. Des moyens 9 de mesure peuvent également être mis en oeuvre. Ces moyens comportent par exemple des moyens de lecture du niveau de produits stockés dans les moyens 7, tels qu'une cellule électronique. Ces mesures peuvent être effectuées à intervalles réguliers, et sont transmises au serveur 12 par des moyens de communication. Selon un mode avantageux, les moyens de mesure 9 peuvent être reliés en réseau au serveur 12, les mesures alimentant alors la base de données 2.

Selon une autre variante, les moyens de stockage 7 peuvent être en outre munis de moyens de traitement des données issues des moyens de mesure 9, ces moyens de traitement permettant d'effectuer sur place des calculs de prévision. Les données résultant de ces calculs sont ensuite transmises par des moyens de communication, de préférence par réseau, au serveur 12.

Certaines des informations ci-dessus peuvent n'être accessibles que de manière sécurisée ou confidentielle par certaines personnes pouvant se connecter au site 2. Il s'agit notamment des informations provenant du client ou de l'utilisateur lui-même et qui ne sont accessibles qu'à ce dernier et au fabricant. Les informations relatives aux sites de production sont accessibles aux transporteurs utilisés et aux clients eux-mêmes.

Certaines informations générales 6 concernant le fabricant ou le fournisseur peuvent être accessibles par toute personne se connectant au site 2, mais la plupart des informations sensibles ou importantes dans le cadre de la gestion de la production, de l'approvisionnement et de la consommation ou de l'utilisation des produits ne seront accessibles qu'aux intervenants directs, à savoir fabricant et/ou fournisseur, transporteur et client ou utilisateur.

Aux fins de confidentialité, des clés secrètes d'accès peuvent être distribuées aux clients ou utilisateurs, qui leur permettront d'avoir accès aux informations qui leur seront réservées.

Il peut s'agir, pour chaque utilisateur, d'un identifiant et d'un mot de passe.

Des données peuvent être échangées de manière sécurisée entre un des clients et le serveur, par exemple à l'aide d'un logiciel de cryptage/décryptage installé à la fois dans les moyens informatiques 8 et dans le serveur 12. D'autres solutions peuvent être utilisées pour sécuriser l'échange de données entre le client et le serveur.

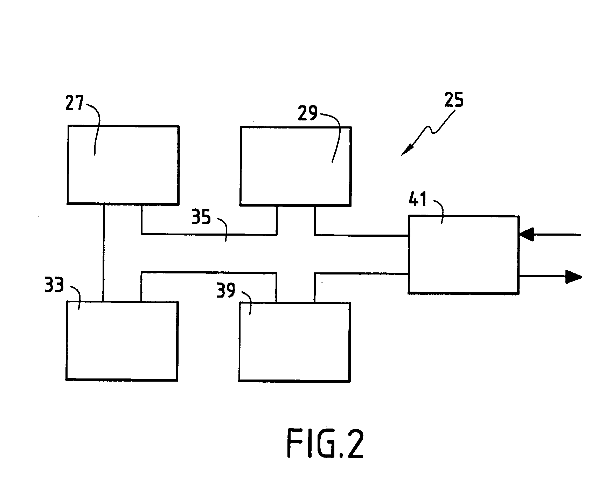

Divers utilisateurs peuvent être connectés aux moyens 2 d'hébergement de ces bases de données. Sur la figure 1, un de ces utilisateurs est représenté par son ordinateur portable ou de type PC 8, la connexion avec les moyens 2 étant assurée par un réseau de communication, par exemple le réseau internet 18 et par des moyens 41 (figure 2) de connexion à ce réseau (modem ou carte réseau).

En parallèle, d'autres utilisateurs 70, 72, 74, 76, représentés sur la figure 3, peuvent être connectés au serveur 12, via des moyens de connexion 61, 63, 65, 67, et le réseau Internet 60.

Le système informatique 8, de même que les systèmes 70, 72, 74, 76, peut être par exemple un micro-ordinateur de type PC du commerce.

Un tel système comporte (figure 2) une unité centrale 25, qui comprend elle-même un microprocesseur 27, un ensemble 29 de mémoires ROM et RAM, un disque dur 23, qui a aussi une fonction de stockage d'informations, tous ces éléments étant couplés à un bus 35. Des données de programme, par exemple de programme de cryptage-décryptage en vue de l'échange sécurisé de données avec le serveur, peuvent être mémorisées dans les mémoires de ce système.

Un écran 39 permet de visualiser des informations sur les données rentrées dans le système par un opérateur, et les données fournies par les bases de données en réponse aux données entrées par l'opérateur. Des pages de présentation sont successivement affichées au cours de l'exécution du procédé selon l'invention. Ces pages peuvent permettre, pour certaines, de saisir des données telles que un ou des code(s) ou clé(s) d'accès sécurisé, de manière à ce que seules les personnes autorisées puissent se connecter à certaines zones du site 2 ou puissent avoir accès à certaines informations dans la base de données 4.

Le système dispose également de périphériques de contrôle, et notamment d'un clavier 30 et d'une souris 31. D'autres moyens pour sélectionner une zone ou un champ d'une page affichée à l'écran 29 peuvent être également utilisés, par exemple tout moyen permettant de réaliser une sélection par contact tactile sur l'écran.

Le serveur 14 a globalement une structure du même type, avec processeur(s), zones de mémorisation de données (certaines sont d'ailleurs désignées sur la figure 3 par les références 2, 6, 14, 16).

Dans une zone mémoire du serveur peuvent être mémorisées les données ou instructions de programme pour mettre en oeuvre un procédé selon l'invention.

Ces données ou instructions peuvent être transférées dans une zone mémoire du serveur à partir d'une disquette ou de tout autre support pouvant être lu par un ordinateur (par exemple: disque dur, mémoire morte ROM, mémoire vive dynamique DRAM ou tout autre type de mémoire RAM, disque optique compact, élément de stockage magnétique ou optique).

Des données de programme, par exemple de programme de cryptage-décryptage en vue de l'échange sécurisé de données avec le serveur, peuvent être mémorisées dans les mémoires de ce système.

En réponse aux instructions de l'utilisateur, une connexion est établie entre le système 8 et les moyens 2 qui hébergent la base de données et, éventuellement, les programmes à mettre en oeuvre pour exécuter certaines étapes ou certains calculs, par exemple les étapes de calcul ou de prévision de consommations.

Une session peut alors être initialisée, au cours de laquelle, en réponse à des données introduites par l'utilisateur, le système 12 va envoyer à cet utilisateur des données sélectionnées par recherche dans la base de données ou résultant d'un calcul effectué par le serveur 12 (l'application 16).

La session peut être interactive ou pas.

Ainsi peuvent être restituées ou fournies au client les informations suivantes:
- caractéristiques de son propre site (procédés et équipements mis en oeuvre, capacité des moyens de stockage 7),
- historique des différentes commandes et/ou livraisons qui lui ont déjà été effectuées, par exemple par les bulletins de commande et/ou de livraison disponibles en ligne sur le site, avec, par exemple, mentions des quantités commandées et/ou livrées, des dates de commande ou de livraison),
- informations relatives aux produits qui lui ont déjà été effectivement livrés, telles que par exemple analyse du produit (composition exacte) et/ou certificat de conformité,
- niveaux des produits dans les moyens de stockage 7 dont dispose l'utilisateur.

Peuvent aussi lui être restituées : les informations de prévision de consommation, et/ou de livraison, et/ou des analyses de consommation, et/ou encore les engagements réciproques des parties.

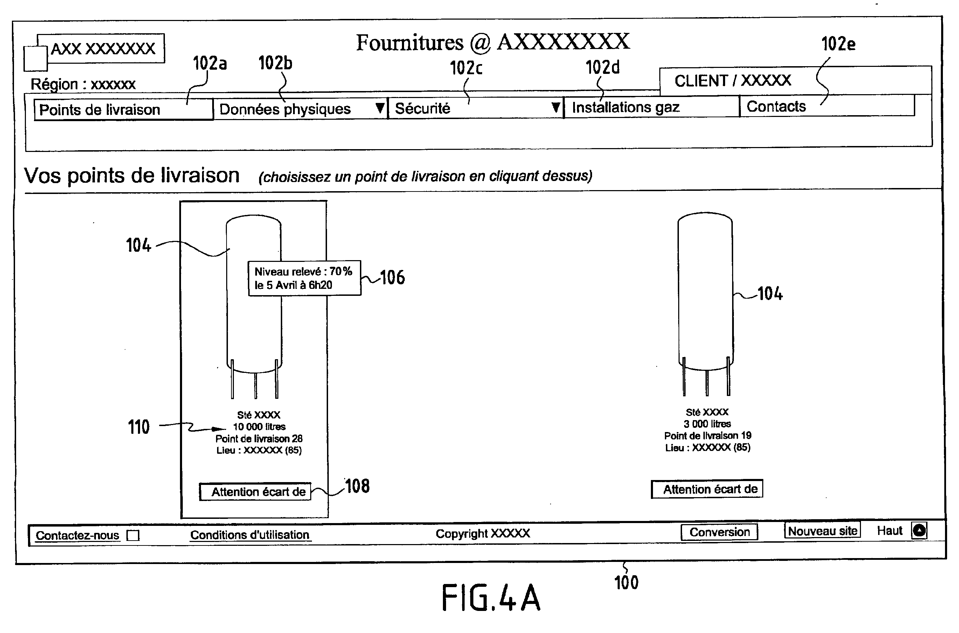

Des exemples de ces restitutions d'information seront donnés plus loin en liaison avec les figures 4 A à 4 E.

En ce qui concerne les caractéristiques de son propre site et les niveaux des produits dans les moyens de stockage 7, on pourra faire l'observation suivante. La personne qui consulte le site en ligne n'a pas nécessairement connaissance, immédiatement, de toutes les ressources de production et de toute les capacités de stockage dont elle dispose.

C'est le cas, en particulier, pour des activités mettant en oeuvre des installations dispersées géographiquement et complexes, par exemple des unités de production d'acier disposées en différentes villes.

Il en va de même en ce qui concerne la possibilité de mesurer directement les niveaux de produits restants dans les moyens de stockage dont dispose la personne qui consulte le site. Ces moyens de stockage peuvent donc être équipés des moyens 9 de mesure automatique connectés au réseau de communication ainsi qu'au site 12 et à la base de données 4. Il est alors plus aisé à une personne physique travaillant pour l'utilisateur (ce dernier étant par exemple une société qui réalise un processus de production) de se connecter au site 2 que d'aller vérifier sur chaque cuve de stockage les niveaux de gaz ou de produits présents.

A ces informations brutes peuvent s'ajouter des informations résultant de la mise en oeuvre de programmes spécifiques pouvant effectuer des calculs à partir des informations brutes. Il s'agit par exemple de calculs (effectués par l'application 16) de prévision de consommation et/ou de livraison, ou encore d'autonomie de fonctionnement avec le produit restant dans le stockage.

Il peut s'agir aussi de programmes ou de moyens de déclenchement d'alertes lorsqu'un niveau approche d'un niveau maximal ou minimal devant être présent dans les moyens de stockage ou lorsqu'une consommation présente un écart par rapport à une référence donnée ou atteint une certaine valeur entre deux périodes de consommation.

A l'aide des moyens 8, l'utilisateur peut, quant à lui, introduire directement sur le site des données nouvelles ou modifier des données déjà existantes sur le site.

Il peut, par exemple, passer une commande non encore prévue, en précisant date et quantité souhaitées, ou donner une information sur sa consommation future, ou indiquer un changement de rythme dans sa consommation, ou indiquer un franchissement d'un niveau de sécurité de stockage.

Certaines de ces informations peuvent avoir à leur tour un effet sur les calculs de prévision de consommation et/ou de livraison, ou encore sur les calculs d'autonomie de fonctionnement avec le produit restant dans le stockage.

D'autres peuvent avoir un effet sur un calendrier de livraison, par exemple si l'utilisateur annonce un nouveau mode de fonctionnement d'un site de production (dans le cas d'un changement de rythme de travail) ou encore une fermeture provisoire d'un tel site pour chômage technique.

L'invention permet donc de partager immédiatement des mêmes informations techniques entre plusieurs personnes ou entre plusieurs sites industriels qui doivent adapter leurs activités techniques et industrielles le plus rapidement possible en fonction de ces informations.

Il s'agit notamment des informations relatives à des rythmes de consommation passés, et/ou actuels, et/ou futurs d'un site industriel consommateur 13, et/ou relatives à l'autonomie de fonctionnement, et/ou aux niveaux de sécurité, et/ou encore de l'information relative à l'ensemble de la chaîne de fourniture en matière première (par exemple: localisation des usines 3 de production ou des unités de stockage du fournisseur, et/ou capacités de production de ces usines ou capacités de stockage de ces moyens de stockage, et/ou livraisons prévues de cette matière, et/ou caractéristiques techniques de la matière disponible, par exemple la nature ou la dénomination ou l'identification de cette matière) dont a besoin ce site industriel consommateur.

Parmi les personnes, ou les sites industriels concernés, qui ont accès à ces informations communes, figurent non seulement les sites industriels consommateurs de produits ou de matière première, mais encore le producteur industriel ou le fabricant ou le fournisseur de ces produits ou de cette même matière première, ou encore le transporteur chargé de les livrer au(x) site(s) industriel(s) consommateur(s).

La connaissance des capacités de production ou de stockage des moyens 3 de production ou de stockage, et/ou des livraisons prévues et/ou du niveau de ses propres stocks permet à l'utilisateur d'adapter sa production ou la fourniture de ses services. Ainsi il peut éviter de commencer la production de certains produits pour lesquels la matière première ne sera pas disponible à un instant donné, ou bien il peut au contraire commencer une production de produits en sachant que la matière première est disponible ou va être disponible prochainement. Il en va de même pour les services : l'utilisateur peut alors prendre commande de certains services ou au contraire les refuser en fonction de la disponibilité de la matière produite par les moyens 3.

Un autre acteur de la chaîne de fourniture en produits à l'utilisateur final est le transporteur ou la personne responsable du transport de ces produits. Elle dispose de moyens d'accès au site similaires à ceux dont dispose l'utilisateur. Elle dispose donc des mêmes informations que celui-ci. Elle a en outre accès à des informations relatives à d'autres sites industriels à livrer.

Par connexion au site 2, à l'aide des moyens 11, cette personne peut identifier les livraisons en cours, ou les prochaines livraisons à effectuer, et donc adapter sa capacité de transport aux besoins actuels ou futurs.

Le transporteur peut aussi obtenir des informations relatives aux besoins des utilisateurs ou aux livraisons à faire prochainement. En effet, comme déjà expliqué ci-dessus, l'application 16 permet de produire des données relatives aux livraisons à effectuer. Elle permet donc d'imprimer des feuilles de tournées à partir de ces mêmes informations et d'imprimer des bordereaux de livraison associés (avec, notamment, nom et adresse du client, nature et quantité du produit à livrer).

Après livraison, il est possible de saisir des données dans la base 2, telles que les quantités effectivement livrées, les niveaux éventuellement mesurés après livraison. Ces informations peuvent avoir été notées sur un bon de livraison 15, signé par le client lors de la livraison, et sont enregistrées par exemple dans les moyens informatiques 11, au retour de la livraison. Il y a ensuite transmission de ces informations à la base de données 4.

Cette saisie pourra être effectuée, soit lors du retour comme expliqué ci-dessus, soit à l'aide de moyens informatiques embarqués sur des camions de livraison.

Il en va de même pour le fabricant ou le fournisseur, qui a accès aux informations du site 2 ou de la base de données 4 par les liaisons 10, 17. Il peut adapter lui aussi la fabrication des produits par les usines 3, ou la gestion de ses stocks de produits, en fonction des informations disponibles sur le site (notamment: besoins exprimés par les consommateurs ou les utilisateurs, et/ou données de prévision de consommation éventuellement calculées).

Le fabricant, ou le fournisseur, de matière ou de produits à livrer à l'utilisateur dispose lui aussi des informations rassemblées sur le site et peut adapter sa propre production, ou ses propres commandes ou ses propres stocks, en fonction des besoins, ou des quantités nécessaires, exprimé(e)s par les utilisateurs ou des besoins prévus par calcul de prévisions de consommation. Ainsi, en cas d'accroissement de ces besoins ou de ces quantités, la production, ou la commande par le fournisseur, de matière ou de produits est accrue, tandis qu'elle est réduite dans le cas où une réduction globale des besoins est constatée.

Ceci permet en outre d'éviter de produire ou de commander des surplus de produits qui poseront d'une part un problème de stockage et éventuellement de sécurité, mais qui d'autre part peuvent être périssables.

L'invention permet donc de minimiser le temps de stockage de produits chez le fabricant ou le fournisseur, et de livrer ces produits à l'utilisateur le plus rapidement possible, non seulement après le besoin éventuellement manifesté par l'utilisateur, mais aussi après consommation.

Divers acteurs de la chaîne peuvent se connecter simultanément à la base de données 2 ou à l'ordinateur qui l'héberge.

Par exemple, sur la figure 3 sont représentés quatre utilisateurs 70, 72, 74, 76, qui peuvent avoir des localisations géographiques très distinctes et qui sont connectés, via l'Internet 60 et des connections spécifiques 61 - 67, à l'ordinateur 2.

Peuvent être connectés deux utilisateurs 70, 72, par exemple deux industriels dans des domaines très différents, le transporteur 74 et le fabricant ou le fournisseur 76. Les données fournies par les utilisateurs 70, 72 permettent de mettre à jour les quantités à fabriquer par le fabricant ou le fournisseur 76 et à livrer par le transporteur 74.

L'ensemble des utilisateurs du système peuvent donc être reliés en réseau à un système informatique central 12. C'est notamment le cas d'une pluralité de producteurs ou d'utilisateurs formant un ensemble de moyens de production 13 ou d'usines ou un ensemble de sites d'utilisation reliés par des moyens de communication, au dispositif 12. Chaque usine ou chaque site d'utilisation peut réguler sa propre production ou activité en fonction des données de production du fabricant ou des données de stockage du fournisseur présentes sur le site ou l'ordinateur 12, de même que la production du fabricant ou le stockage du fournisseur peut être adapté(e) en fonction des besoins du ou des utilisateurs clients ou des usines.

Divers moyens peuvent être employés à la place des moyens informatiques 8, 11, 23. Par exemple, des téléphones mobiles peuvent aussi être utilisés pour la transmission de certaines données, notamment sous forme SMS.

Les figures 4 A à 4 E représentent diverses pages écran pouvant être visualisées par un opérateur au cour de la mise en oeuvre d'un procédé selon l'invention.

Une première page d'introduction 100 (figure 4 A) permet de présenter, pour un utilisateur donné, divers onglets 102 a - e permettant de sélectionner et d'exécuter diverses applications telles que, par exemple : répartition et équipement des points de livraison (onglets 102 a), données physiques sur les produits utilisés (onglet 102 b), indication relatives aux mesures de sécurité à utiliser avec tel ou tel produit (onglet 102 c), description des installations fonctionnant avec le fluide utilisé (installations gaz, onglet 102 d), accès à diverses informations (onglet 102 e).

Ainsi, sur la page représentée en figure 4 A, un point de livraison a été sélectionné. Le moyen de stockage situé en ce lieu est représenté schématiquement sur la page correspondante (référence 104). Une information 106 concernant le niveau de stockage et la date à laquelle ce niveau à été constaté peut également apparaître sur cette page. Un voyant, ou un encart 108, présente à l'utilisateur un signal d'alerte de consommation relatif au moyen de stockage 104, ou un signal d'alerte en cas d'événement exceptionnel. Sont également indiqués, dans le champ 110, sous le schéma 104, la nature et la qualité du fluide stocké dans les moyens 104.

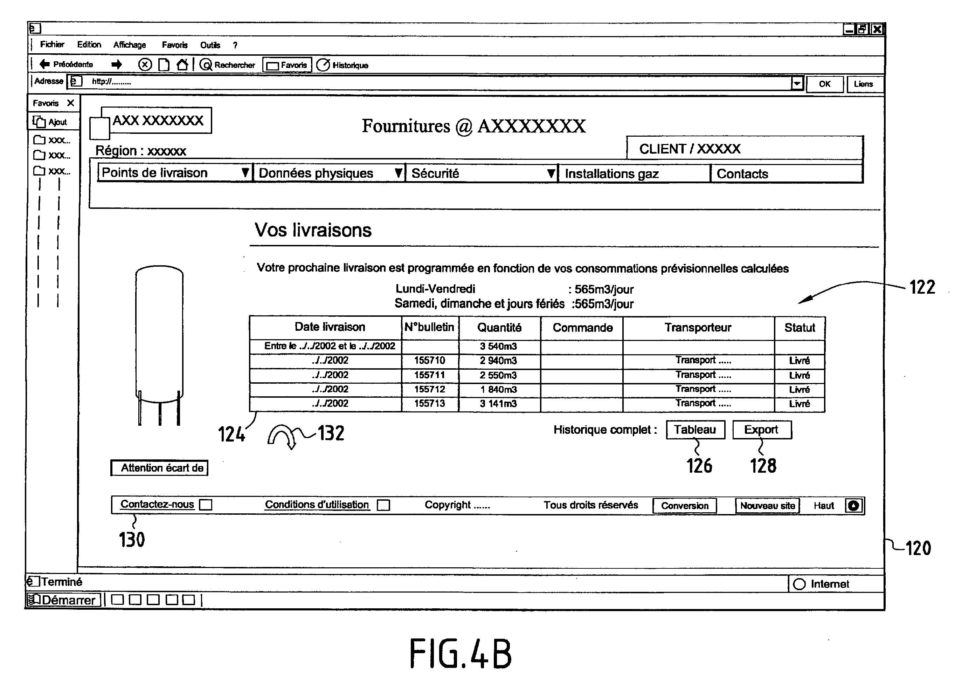

Les donnés de livraisons peuvent également être représentées, comme illustré sur la figure 4 B.

Cette page donne une information concernant les consommations prévisionnelles calculées (voir zone 122 sur la page 120), ces calculs étant réalisés selon un algorithme prédéterminé, par exemple selon l'application 16 représentée en figure 1.

Un tableau 124 indique successivement, de gauche à droite :
- les différentes dates de livraisons (passées et prévues),
- le numéro de bulletin de livraison correspondant,
- la quantité livrée ou a livrer, le nom du transporteur,
- le statut de la livraison (livré ou en prévision de livraison).

Peuvent également être visualisés diverses informations associées à chacune de ces livraisons: numéro du lot, et/ou source du produit, et/ou résultat d'analyse, et/ou copie du bordereau de livraison papier si la livraison a déjà été effectuée.

Un onglet 126 permet d'obtenir un récapitulatif des bulletins de livraisons, par exemple un historique de ces bulletins sur une période donnée, par exemple une année, avec, pour chaque livraison, la date, le numéro de livraison, la quantité livrée, la référence de la commande, ...

Un autre onglet 128 permet de mettre en oeuvre une fonction « export », vers une autre application ou vers une page, des données visualisées ou sélectionnées.

Divers onglets 130, représentés en bas de page sur la figure 4 B, permettent, par exemple d'accéder à une autre page pour effectuer une commande du produit, ou bien encore d'accéder à une page pour reproduire des données relatives à une variation de la consommation de l'utilisateur.

Un autre onglet 132, représenté sur la figure 4 B par une flèche, permet de valider une proposition de réapprovisionnement faite par le fournisseur.

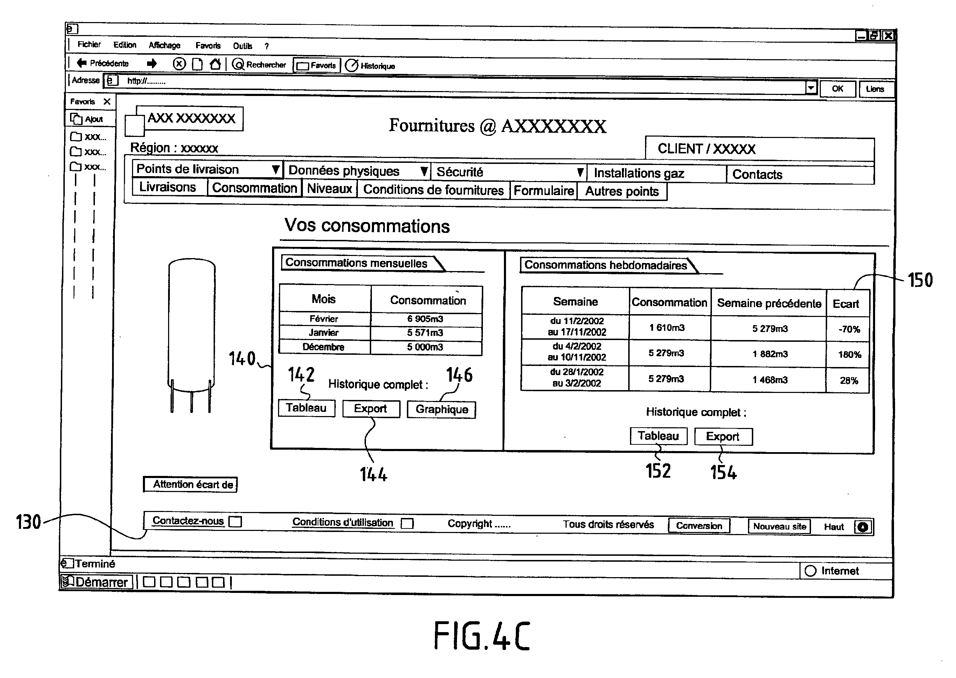

La figure 4 C représente une page qui rassemble diverses informations relatives aux consommations de l'utilisateur.

Ainsi, dans un encart 140 peuvent être représentées les consommations du produit pendent plusieurs mois successifs. Un tel tableau peut être établi à partir des bordereaux de livraison. Des onglets 142, 144, 146 permettent de sélectionner une représentation en forme de tableau, ou un export des données sélectionnées, ou encore une représentation graphique des consommations.

Un autre tableau 148 permet de représenter des consommations sur une période différente de celle du tableau 140, par exemple une consommation hebdomadaire. Cette consommation hebdomadaire est par exemple calculée à partir des relevées de niveau et des bulletins de livraison. Un calcul de variation de consommation entre deux périodes successives (dans le cas présent, entre deux semaines) peut aussi être effectué et présenté dans une colonne 150. Un tel écart peut être représenté dans une couleur particulière s'il atteint un seuil prédéterminé, par exemple 20%.

Là encore, des onglets 152, 154 permettent de sélectionner, d'une part une représentation sous forme de tableau, d'autre part un export de certaines données vers une autre page ou une autre application.

Là encore, le bandeau inférieur 130 permet d'accéder à diverses autres applications, déjà mentionnées ci-dessus.

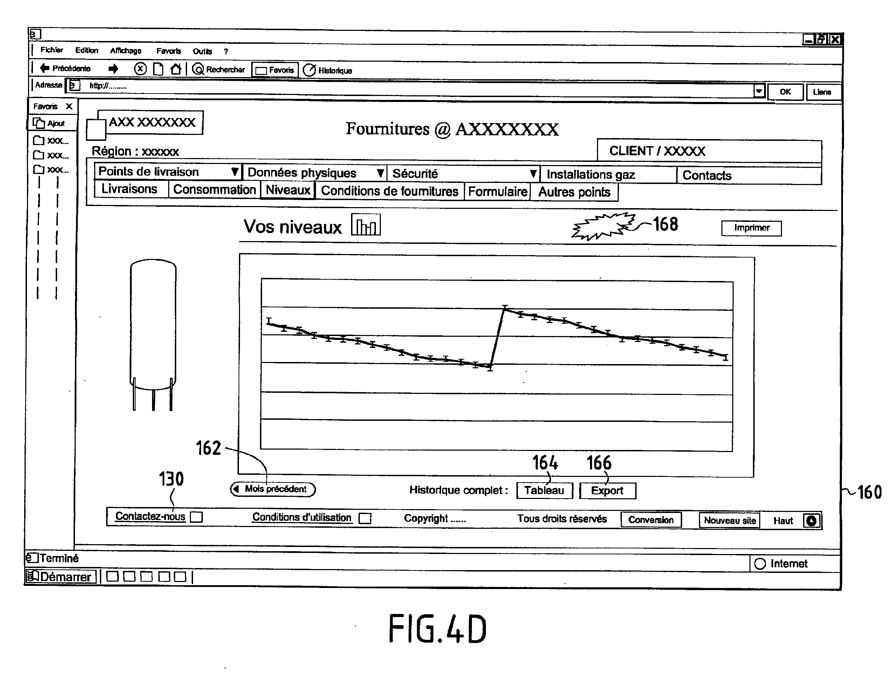

La page 160 de la figure 4 D est une représentation graphique de l'évolution du niveau de fluide dans le container 104. Ce graphique correspond à une période donnée, et un onglet 162 permet de sélectionner d'autres périodes temporelles.

Deux onglets 164 et 166 permettent, d'une part de sélectionner une représentation sous forme de tableau, et d'autre part d'exporter, vers une autre application ou une autre page, certaines données.

Le bandeau 130, en bas de page, offre les mêmes possibilités que déjà décrit ci-dessus.

Un onglet 168 permet de réaliser un calcul d'autonomie à rythme de consommation constant, ou des simulations d'autonomie avec des variations de rythme.

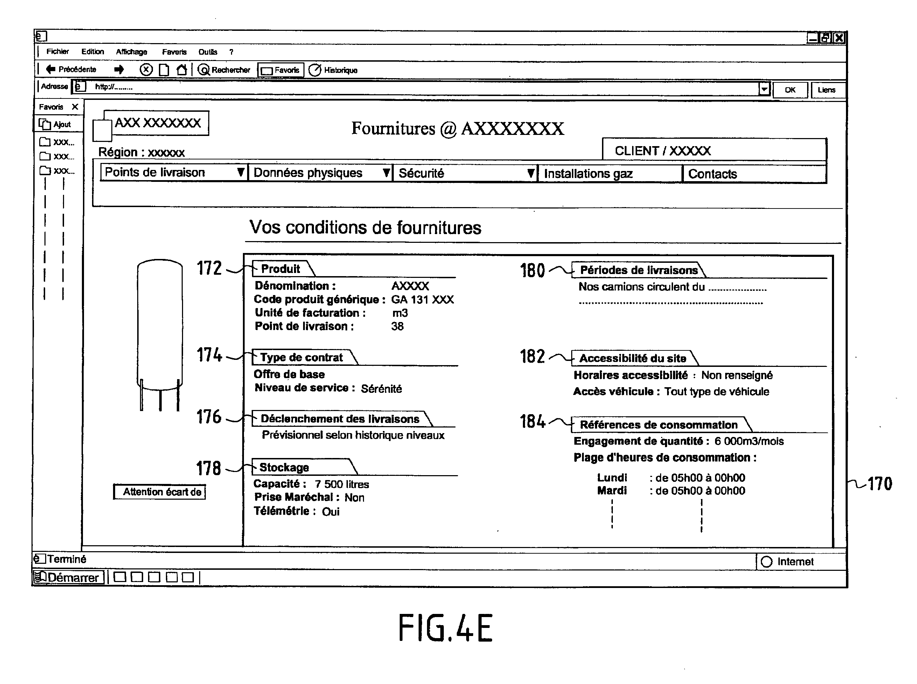

La figure 4 E rassemble, sur une page 170, diverses conditions de fourniture du produit utilisé par l'utilisateur. Peuvent être représentées :
- la nature du produit (champ 172),
- le type de contrat (champ 174),
- le mode de déclenchement des livraisons (champ 176),
- les conditions de stockage (par exemple : capacité, et diverses informations techniques sur l'équipement des moyens de stockage, champ 178),
- les périodes de livraison (champ 180),
- les conditions d'accessibilité du site (champ 182),
- certaines références relatives à la consommation, telles que les plages d'heures de consommation, champ 184).

## Revendications

1. Procédé pour adapter une production, par une unité de production (3) d'au moins un produit à une consommation dudit produit par au moins un consommateur (13) de ce produit, comportant:
- la mémorisation, dans des moyens de mémorisation (4), de données relatives à au moins l'état de stocks dudit produit contenus dans des moyens de stockage (7) dudit consommateur et aux besoins en produit de ce consommateur,
- le calcul de données de prévisions de consommation, en fonction des données mémorisées précédentes,
- la variation de production, par l'unité de production (3), en fonction des données de prévision de consommation précédentes.

2. Procédé d'approvisionnement d'un consommateur (13) en au moins un produit consommé par ledit consommateur, comportant:
- la mémorisation, dans des moyens de mémorisation (4), de données relatives à au moins l'état de stocks dudit produit contenus dans des moyens de stockage (7) dudit consommateur et aux besoins en produit de ce consommateur,
- le calcul de données de prévisions de consommation, en fonction des données mémorisées précédentes,
- la génération (21) de données de livraison dudit produit en fonction des données de prévisions de consommation calculées.

3. Procédé pour adapter une utilisation, par une unité (13) de consommation d'au moins un produit, comportant:
- la mémorisation, dans des moyens de mémorisation (4), de données relatives à au moins l'état de stocks dudit produit contenus dans des moyens de stockage (7) de ladite unité de consommation et aux besoins en produit de cette unité de consommation,
- la variation de consommation, par l'unité de consommation (13), en fonction des données précédentes.

4. Procédé selon l'une des revendications 1 à 3, lesdits moyens de mémorisation comportant en outre des données de caractéristiques techniques relatives à des unités de fabrication ou de stockage ou à des moyens de production (3) dudit produit.

5. Procédé selon la revendication 4, lesdites données de caractéristiques techniques relatives à des unités de fabrication (3) ou de stockage ou à des moyens de production (3), comportant au moins une donnée relative à la localisation des unités de production et/ou de stockage et/ou au moins une caractéristique dudit produit.

6. Procédé selon l'une des revendications 1 à 5, ledit produit étant un gaz.

7. Procédé selon l'une des revendications 1 à 6, comportant en outre une étape de conditionnement dans des moyens de transport (5), puis de transport dudit produit vers ledit consommateur ou ladite unité de consommation (7,13) de ce produit.

8. Procédé selon la revendication 7, comportant en outre une étape de mémorisation, dans lesdits moyens de mémorisation (4), des données relatives à au moins une quantité de produit effectivement livrée.

9. Procédé selon la revendication 7 ou 8, comportant, après transport, une étape de transfert dudit produit vers les moyens de stockage (7).

10. Procédé selon l'une des revendications 1 à 9, comportant une étape de mesure de la quantité de produit disponible dans lesdits moyens de stockage (7), et la transmission des données de mesure auxdits moyens de mémorisation (4).

11. Procédé selon la revendication 10, comportant en outre une modification correspondante, suite à la transmission des données de mesure, des données (4) mémorisées relatives à l'état des stocks.

12. Procédé selon l'une des revendications 1 à 11, comportant en outre une étape d'envoi, dans les moyens de mémorisation (4), par le consommateur ou à partir de l'unité de consommation, de données modifiées relatives aux besoins en produit de ce consommateur ou de cette unité de consommation.

13. Procédé selon la revendication 12, comportant en outre une étape de calcul des données de prévisions de consommation, en fonction des données modifiées relatives aux besoins en produit.

14. Procédé selon l'une des revendications 1 à 13, comportant en outre une étape d'envoi, dans les moyens de mémorisation (4), par le consommateur (13) ou à partir de l'unité de consommation, de données de commandes dudit produit.

15. Procédé selon l'une des revendications 1 à 14, lesdits moyens de mémorisation comportant en outre des données de caractéristiques techniques de moyens (13) de production dudit consommateur utilisant ledit produit.

16. Procédé selon la revendication 15, lesdites données de caractéristiques techniques de moyens de production (13) comportant au moins une donnée de rythme de consommation et/ou de variation de ce rythme et/ou une donnée de niveau ou de quantité de sécurité dans les moyens (7) de stockage

17. Procédé selon l'une des revendications 1 à 16, lesdits moyens de mémorisation comportant en outre des données relatives à des livraisons dudit produit.

18. Système de contrôle d'au moins une unité de production (3) ou de stockage d'au moins un produit, en fonction de données de consommation dudit produit par au moins une unité consommatrice (13) de ce produit, comportant:
- des moyens de mémorisation (4), pour mémoriser des données relatives à au moins l'état de stocks dudit produit contenus dans des moyens de stockage (7) dudit consommateur et aux besoins en produit de ce consommateur,
- des moyens (16) de calcul de données de prévisions de consommation, en fonction des données mémorisées précédentes,
- des moyens pour transmettre ces données à ladite unité de production ou de stockage (3).

19. Unité de production de produits industriels comportant:
- des moyens (3) de production desdits produits,
- des moyens (2, 23, 17, 10) de communication pour établir une communication avec un système selon la revendication 18.

20. Système de contrôle de l'approvisionnement d'une unité (13) consommatrice d'un produit, comportant:
- des moyens de mémorisation (4), pour mémoriser des données relatives à au moins l'état de stocks dudit produit contenus dans des moyens de stockage (7) de ladite unité (13) consommatrice et aux besoins en produit de cette unité,
- des moyens (16) de calcul de données de prévisions de consommation, en fonction des données mémorisées précédentes.

21. Système selon la revendication 20, comportant en outre des moyens (16) de calcul de données de livraison dudit produit en fonction des données de prévisions de consommation calculées.

22. Unité de production industrielle comportant:
- des moyens (7) de stockage de produits, dits produits premiers,
- des moyens (13) de production de produits seconds, obtenus à partir des produits premiers,
- des moyens de communication pour établir une communication avec un système selon la revendication 20 ou 21.

23. Unité selon la revendication 19 ou 22, ladite communication étant sécurisée.

24. Système ou unité selon l'une des revendications 18 à 23, les moyens de mémorisation comportant en outre des données relatives à des caractéristiques techniques d'au moins une unité de production dudit produit.

25. Système ou unité selon l'une des revendications 18 à 24, comportant en outre des moyens (9) de mesure d'une quantité ou d'un volume de produits contenus dans lesdits moyens de stockage (7).

26. Système selon la revendication 25, comportant en outre des moyens (18) de communication entre lesdits moyens (9) de mesure et lesdits moyens de mémorisation ou entre lesdits moyens (9) de mesure et des moyens informatiques (12) contenant ces moyens de mémorisation.

27. Système ou unité selon l'une des revendications 18 à 26, comportant en outre des moyens (2, 25) pour établir une liaison sécurisée (10, 17, 20, 21, 22) avec des moyens de communication (8, 11, 23) d'une unité (5, 13) consommatrice et/ou avec des moyens de communication (23) d'une unité (13) de production des produits et/ou avec des moyens de communication (11) d'une unité de gestion de moyens (5) de transport.
